# EUROPÄISCHE PATENTANMELDUNG

(11) **EP 1 139 079 A2**
(43) Veröffentlichungstag der Anmeldung: **04.10.2001**
(21) Anmeldenummer: 01890086.0
(22) Anmeldetag: 19.03.2001
(51) Int. Cl.: G01J 1/08, G01N 21/17

(54) **Messverfahren zur Bestimmung der optischen Transmission oder Reflexion**

(30) Priorität: 27.03.2000 AT 2292000 U
(71) Anmelder: Eurolab Instruments GmbH, 5020 Salzburg (AT)
(72) Erfinder: Wieser, Manfred, Dr., 5020 Salzburg (AT)
(74) Vertreter: Babeluk, Michael, Dipl.-Ing. Mag.

(57) **Zusammenfassung**

Bei einem Messverfahren zur Bestimmung der optischen Transmission oder Reflexion sowie davon abgeleiteter Messgrößen, wobei die Messstrahlung ausgehend von einer modulierten Strahlungsquelle nach der Wechselwirkung mit einem Messobjekt, vorzugsweise in einer Messküvette, von einem Detektor erfasst, in ein elektrisches Signal umgewandelt, frequenzselektiv verstärkt und einer Auswerteeinrichtung zugeführt wird, ist zur Verbesserung des Signal/Rauschabstandes ein Halbleiterlaser oder eine LED vorgesehen, dessen bzw. deren Leuchtstärke sinusförmig moduliert wird. Die sinusförmige Modulation der Leuchtstärke kann durch Stromeinprägung und/oder Modulation der Versorgungsspannung der Lichtquelle oder durch eine elektrooptische Modulation der Messstrahlung erfolgen.

## Beschreibung

Die Erfindung betrifft ein Messverfahren zur Bestimmung der optischen Transmission oder Reflexion sowie davon abgeleiteter Messgrößen, wobei die Messstrahlung ausgehend von einer modulierten Strahlungsquelle nach der Wechselwirkung mit einem Messobjekt von einem Detektor erfasst, in ein elektrisches Signal umgewandelt, frequenzselektiv verstärkt und einer Auswerteeinrichtung zugeführt wird.

Derartige Verfahren und die dafür notwendigen Vorrichtungen sind bereits für einige Anwendungsfälle vorbekannt. Sie weisen eine optische Strahlungsquelle, eine Messkammer, bzw. eine Küvette zur Aufnahme des zu untersuchenden Mediums, einen optischen Strahlungsempfänger mit nachgeschalteter elektronischer Signalverarbeitung sowie verschiedene Maßnahmen zur optischen Filterung der Strahlung vor, bzw. nach dem Messobjekt auf. Zur Verbessung des Signal/Rausch-Verhältnisses ist es üblich mechanische Chopper einzusetzen, welche die optische Strahlung periodisch unterbrechen und damit eine Wechselstrom-Signalverarbeitung ermöglichen. Diese mechanischen Chopper bestehen in der Regel aus einer rotierenden Kreisscheibe, die eine Abfolge speziell geformter Öffnungen und Stege aufweist und dadurch eine Modulation der optischen Strahlung bewirken.

So ist beispielsweise aus der DE 36 23 345 A1 ein Verfahren zur selektiven Messung der Konzentration von IR- bis UV-Strahlung absorbierenden gasförmigen und/oder flüssigen Komponenten bekannt, wobei die Strahlung einer Lichtquelle einen vom zu untersuchenden Medium durchströmten Messraum durchläuft und in einen Messstrahl und einen Referenzstrahl aufgeteilt wird. Ein Chopper sorgt bei dieser Ausführungsvariante dafür, dass der Messstrahl mit dem Referenzstrahl durch eine Linse alternierend auf einen Detektor fokussiert wird. Nachfolgend werden die Eigenschaften eines pyroelektrischen Detektors zur direkten Differenzsignalbildung der alternierenden Strahlung ausgenutzt, was die nachfolgende Signalverarbeitung wesentlich vereinfacht. Ein Nachteil herkömmlicher mechanische Choppersysteme besteht darin, dass sich die erforderlichen hohen Chopperfrequenzen nicht auf einfache Weise realisieren lassen, da die dafür notwendigen hohen Rotationsfrequenzen zu einem dementsprechend schnellen Verschleiß der mechanischen Komponenten führen.

Zur Erhöhung der Chopperfrequenz ist aus der EP 0 555 508 A1 ein Verfahren und eine Vorrichtung zur simultanen Bestimmung der Konzentration von Molekühlverbindung in Gasen und Flüssigkeiten bekannt geworden, bei welchem das Choppersystem neben dem beweglichen Teil ein stationäres Element aufweist, welches in geometrischer Hinsicht mit dem rotierenden Teil weitgehend übereinstimmt. Stehen die Stege des stationären Teils des Choppersystems jeweils vor den Lücken des rotierenden Teils, so wird die Strahlung maximal abgedunkelt. Bewegt sich der rotierende Teil um eine Stegbreite weiter, so ist der Strahlengang maximal geöffnet. Mit Hilfe eines derartigen Choppersystems können Modulationsfrequenzen von bis zu 3kHz erreicht werden. Als Nachteil ist dabei anzuführen, dass der Messbereich auch bei maximal geöffnetem Strahlengang durch den stationären Teil abgedunkelt wird, sodass große Teile der Strahlungsenergie nicht für den Messvorgang zur Verfügung stehen. Weiters sind für das Choppersystem sehr kleine Abmessungen der Öffnungen und Stege notwendig, sodass bei dessen Herstellung Methoden der Mikrostrukturtechnik eingesetzt werden müssen.

In einer speziellen Ausführungsvariante der EP 0 555 508 A1 ist vorgesehen, die mechanischen Choppersysteme durch getaktete Strahlungsquellen zu ersetzten, wobei für unterschiedliche Messparameter unterschiedliche Taktfrequenzen verwendet werden. Die Taktsignale der Taktgeneratoren werden neben der Ansteuerung für die Strahlungsquellen für die Synchronisation der Verstärker der Mittenfrequenzen verwendet. Die Strahlungsquellen emittieren dabei eine Messstrahlung deren Leuchtstärke im wesentlichen rechteckförmig moduliert ist, wodurch Nachteile bei der nachfolgenden Signalverarbeitung entstehen.

Aufgabe der vorliegenden Erfindung ist es, ausgehend von den eingangs beschriebenen Verfahren ein Messverfahren zur Bestimmung der optischen Transmission oder Reflexion vorzuschlagen, welches auf einfache, kostengünstige Weise eine Erhöhung der Modulationsfrequenz ermöglicht und eine Verbesserung des Signal-Rauschabstandes zulässt.

Erfindungsgemäß wird diese Aufgabe dadurch gelöst, dass als Lichtquelle ein Halbleiterlaser oder eine LED verwendet wird, dessen bzw. deren Leuchtstärke sinusförmig moduliert wird. Vorteilhafterweise ist bei der Verwendung von Halbleiterlasern oder LEDs eine hohe Modulationsfrequenz bis in den Megaherzbereich möglich, wobei die sinusförmige Modulation zu einer spektralen Reinheit des Modulationssignals führt und der Signal-Rauschabstand nochmals wesentlich verbessert werden kann.

Insbesondere ist es von Vorteil, wenn die sinusförmige Modulation der Leuchtstärke durch Stromeinprägung und/oder Modulation der Versorgungsspannung der Lichtquelle erfolgt. Dabei wird die Leuchtstärke der Leuchtdiode (IR- bis UV-LED) oder des Halbleiterlasers (IR- bis UV-Laser) durch Stromeinprägung mit entsprechender Vorverzerrung bzw. Modulation der Versorgungsspannung sinusförmig moduliert.

Erfindungsgemäß erfolgt die Modulation der Leuchtstärke im gesamten zur Verfügung stehenden linearen Dynamikbereich der Lichtquelle, d.h. von der Leuchtstärke Null bis zur maximalen Leuchtstärke, bei welcher noch keine Kompression des Modulationssignals festzustellen ist. Es ist eine möglichst hohe Modulationsfrequenz für einen großen Signal-Rauschabstand und zur Erzielung kurzer Zeitkonstanten anzustreben, wobei aber auf die Frequenzabhängigkeit der Lichtquelle als auch auf die Frequenzabhängigkeit der Empfindlichkeit des Detektors (z.B. Fotodiode) Bedacht genommen werden muss. Erfindungsgemäß ist vorgesehen, dass eine Modulationsfrequenz > 1 kHz, vorzugsweise > 10 kHz verwendet wird.

In einer erfindungsgemäßen Variante ist vorgesehen, dass die sinusförmige Modulation der Leuchtstärke durch eine elektrooptische Modulation der Messstrahlung erfolgt. Dabei kann eine Gleichlichtquelle verwendet werden. Beispielsweise kann für die elektrooptische Modulation ein Filter verwendet werden, dessen optische Transmission elektrisch modulierbar ist.

Im folgenden wird die Erfindung durch schematische Zeichnungen näher erläutert. Es zeigen
- Fig. 1: ein Schema der verwendeten Komponenten, sowie
- Fig. 2: eine schematische Darstellung einer Vorrichtung zur Durchführung des erfindungsgemäßen Verfahrens.

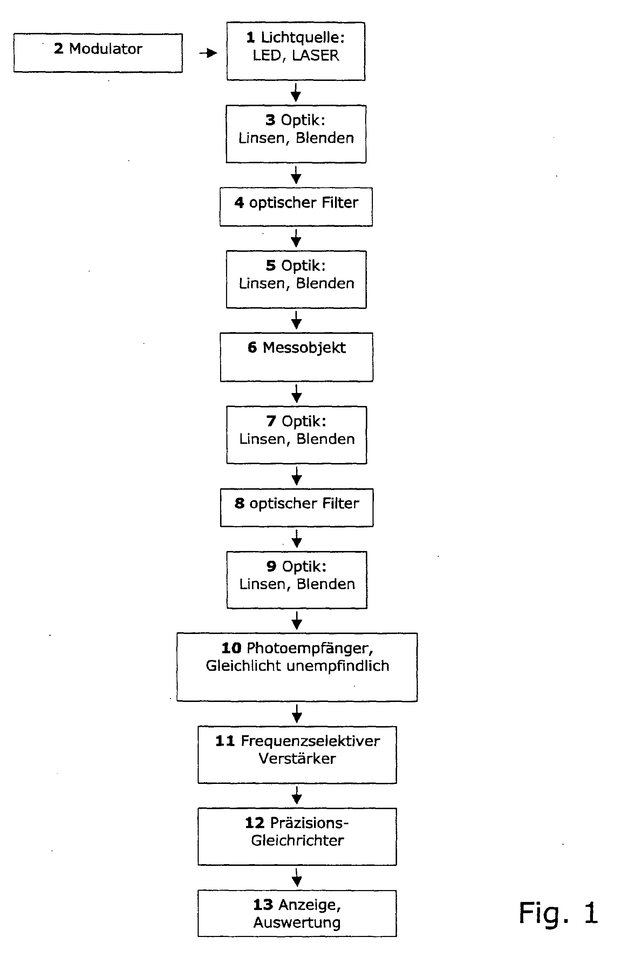

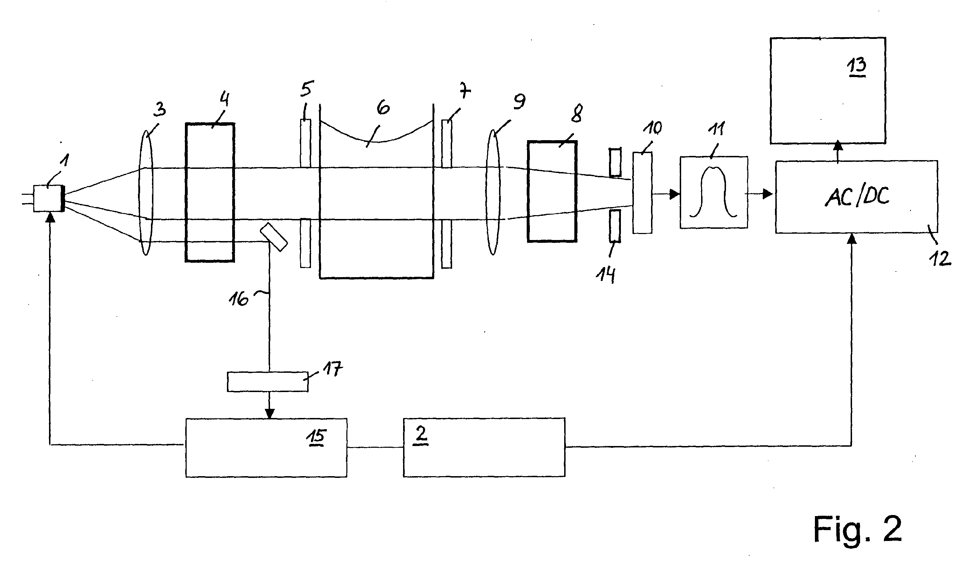

Gemäß Fig. 1 und Fig. 2 wird die Lichtquelle 1 (LED oder Halbleiterlaser) mit Hilfe einer Einrichtung 2 entsprechend moduliert. An mehreren Stellen des optischen Strahlenganges können optische Bauteile (Linsen, Blenden 3, 5, 7, 9, 14 bzw. Filter 4, 8) vorgesehen sein, welche zur Erzielung eines messtechnisch notwendigen parallelen Strahlengangs optimiert bzw. auf die individuellen Eigenheiten des Messobjektes und des Messverfahrens abgestimmt sind. Beispielsweise erfordert ein Messobjekt 6 mit konvexer Flüssigkeitsoberfläche einen konvergenten Lichtstrahl an der Eintrittsfläche bei der Vertikalfotometrie.

Entweder im Strahlengang vor und/oder nach dem Messobjekt 6 können bei Bedarf ein oder mehrere gewünschte Wellenlängenbereiche durch schmalbandige, optische Filter 4, 8 (z.B. Interferenzfilter, Farbglasfilter, Polarisationsfilter oder elektrooptische Filter) aus dem in der Regel breitbandigeren optischen Signal der Lichtquelle 1 herausgefiltert werden.

Das Messobjekt 6 ist in geeigneter Form im Strahlengang anzuordnen. Bei flüssigen oder gasförmigen Messobjekten werden in der Regel Küvetten aus Glas, Quarz oder Kunststoff als Messkammer verwendet. Die Flüssigkeitssäulen oder Gasräume können dabei in vertikaler oder horizontaler Richtung durchstrahlt werden. Der Detektor 10 empfängt das durch das Messobjekt geschwächte, modulierte optische Signal und wandelt es mittels geeigneter Verstärker in ein elektrisches Sinussignal um. Erfindungsgemäß kann für die Detektion der Messstrahlung eine für Gleichlicht unempfindliche Detektionseinrichtung verwendet werden. Weiters ist es möglich mit einem geeigneten Verstärker eine Unterdrückung des Gleichlichtanteiles durchzuführen. Vor dem Detektor 10 kann eine weitere Blende 14 angeordnet sein.

Das verbleibende Signal wird nun mit der Frequenz der Modulation selektiv (schmalbandig) durch ein oder mehrere Wechselspannungsverstärker 11 verstärkt.

Der Vorteil dieser Methode liegt in der Einengung der erforderlichen Verstärker-Bandbreite, deren minimale Größe durch die zu erwartende maximale Änderungsgeschwindigkeit der Messergebnisse bestimmt ist. In der Regel sind diese (meist chemisch bedingten) Änderungsgeschwindigkeiten so langsam, daß die Bandbreiten der Filter nur Bruchteile der Modulationsfrequenz betragen können.

In einer Weiterbildung der Erfindung ist vorgesehen, dass nach der frequenzselektiven Verstärkung des elektrischen Signals ein Präzisions-Gleichrichter durchlaufen wird. Die Gleichrichtung im Präzisionsgleichrichter 12 kann je nach Anwendungsfall ausgeführt werden, wobei mögliche Auswahlkriterien die Änderungsgeschwindigkeit der Messergebnisse, der Signal-Rauschabstand oder die Frequenzselektivität sind. In der Vorrichtung gemäß Fig. 2 weist die Modulationseinrichtung 2 einen Sinusgenerator (z.B. 10 kHz) auf, welcher über einen Spannungs/Stromwandler 15 die Leuchtstärke der LED 1 moduliert. Ein Referenzsignal des Sinusgenerators wird dem Gleichrichter 12 zugeführt.

Zur Kompensation langfristiger Schwankungen in der Leuchtstärke der Lichtquelle 1 wird ein Referenzstrahl 16 ausgekoppelt und einem Referenzfotosensor 17 zugeführt, wobei das sich ergebende elektrische Signal als Regelgröße für den Spannungs/Stromwandler 15 dient.

Erfindungsgemäß kann beispielsweise eine aperiodische (frequenzunabhängige) Gleichrichtung, eine frequenzselektive Gleichrichtung (phasenunabhängier oder phasenselektiver Synchrongleichrichter) oder eine Spitzenwertgleichrichtung (mit Sample and Hold) durchgeführt werden. Allen Ausführungsformen gemeinsam ist eine entsprechend präzise Ausführung der elektronischen Schaltung um einen möglichst großen linearer Dynamikbereich zu erzielen. Das Ausgangssignal des Gleichrichters 12 wird einer Auswerte- bzw. Anzeigeeinrichtung 13 zugeführt.

Insgesamt ergeben sich mehrerer gewichtige Vorteile dieses Messverfahrens:

Eine Gleichlichtumgebung oder Kunstlicht (Sonnenlicht, künstliche Beleuchtung mit 50 oder 60 Hz) hat keinen messbaren Einfluss auf das Messergebnis bzw. die Messgenauigkeit, da mit höherfrequenten Wechsellicht gemessen wird, wobei eine Fremdlichtunterdrückung von über 5 Größenordnungen ohne großen Aufwand erzielt werden kann.

Das bedeutet, dass spezielle Abdunkelungsmaßnahmen auch für genaueste Messungen entfallen können.

Unter Berücksichtigung der möglichen Änderungsgeschwindigkeit der Messergebnisse eines Objektes kann die Filter-Bandbreite der Empfangsschaltung sehr klein ausgelegt werden, sodass aus diesem Grund eine weitere signifikante Verbesserung des Signal-Störabstandes zustande kommt.

Darüber hinaus kann bei Auswahl einer entsprechenden Gleichrichtungsart der Signal-Rauschabstand des Messverfahrens weiter drastisch verringert und damit der ausnützbare Dynamikbereich vergrößert werden.

Es ist unter Ausnützung aller beschriebenen Maßnahmen möglich, Nutzsignale, die wesentlich schwächer als die Störsignale sind, zu erkennen, zu detektieren und präzise zu messen.

## Patentansprüche

1. Messverfahren zur Bestimmung der optischen Transmission oder Reflexion sowie davon abgeleiteter Messgrößen, wobei die Messstrahlung ausgehend von einer modulierten Strahlungsquelle nach der Wechselwirkung mit einem Messobjekt von einem Detektor erfasst, in ein elektrisches Signal umgewandelt, frequenzselektiv verstärkt und einer Auswerteeinrichtung zugeführt wird, **dadurch gekennzeichnet, dass** als Lichtquelle ein Halbleiterlaser oder eine LED verwendet wird, dessen bzw. deren Leuchtstärke sinusförmig moduliert wird.

2. Verfahren nach Anspruch 1, **dadurch gekennzeichnet, dass** die sinusförmige Modulation der Leuchtstärke durch Stromeinprägung und/oder Modulation der Versorgungsspannung der Lichtquelle erfolgt.

3. Verfahren nach Anspruch 1, **dadurch gekennzeichnet, dass** die sinusförmige Modulation der Leuchtstärke durch eine elektrooptische Modulation der Messstrahlung erfolgt.

4. Verfahren nach Anspruch 3, **dadurch gekennzeichnet, dass** für die elektrooptische Modulation ein Filter verwendet wird, dessen optische Transmission elektrisch modulierbar ist.

5. Verfahren nach einem der Ansprüche 1 bis 4, **dadurch gekennzeichnet, dass** die Modulation der Leuchtstärke im gesamten zur Verfügung stehenden linearen Dynamikbereich der Lichtquelle erfolgt.

6. Verfahren nach einem der Ansprüche 1 bis 5, **dadurch gekennzeichnet, dass** eine Modulationsfrequenz > 1 kHz, vorzugsweise > 10 kHz verwendet wird.

7. Verfahren nach einem der Ansprüche 1 bis 6, **dadurch gekennzeichnet, dass** für die Detektion der Messstrahlung eine für Gleichlicht unempfindliche Detektionseinrichtung verwendet wird.

8. Verfahren nach einem der Ansprüche 1 bis 7, **dadurch gekennzeichnet, dass** nach der frequenzselektiven Verstärkung des elektrischen Signals ein Präzisions-Gleichrichter durchlaufen wird.

9. Verfahren nach Anspruch 8, **dadurch gekennzeichnet, dass** eine aperiodische Gleichrichtung, eine frequenzselektive Gleichrichtung, eine phasenselektive Gleichrichtung, oder eine Spitzenwertgleichrichtung durchgeführt wird.
